# EUROPÄISCHE PATENTANMELDUNG

(11) **EP 2 332 717 A1**
(43) Veröffentlichungstag der Anmeldung: **15.06.2011**
(21) Anmeldenummer: 09015049.1
(22) Anmeldetag: 04.12.2009
(51) Int. Cl.: B29C 61/06, F03G 7/06

(54) **Elektromechanisches Aktorsystem umfassend ein dielektrisches Elastomer mit Formgedächtniseigenschaften**

(71) Anmelder: Bayer MaterialScience AG, 51368 Leverkusen (DE)
(72) Erfinder: Jenninger, Werner, Dr., 50677 Köln (DE); Wagner, Joachim, Dr., 51061 Köln (DE)

(57) **Zusammenfassung**

Ein elektromechanisches Aktorsystem umfasst: eine erste Elektrodeneinheit (10) und eine zweite Elektrodeneinheit (20); eine zwischen erster und zweiter Elektrodeneinheit (10, 20) angeordnete Polymerschicht (30), wobei die Polymerschicht (30) ein dielektrisches Elastomer mit Formgedächtniseigenschaften umfasst; eine die erste und zweite Elektrodeneinheit (10, 20) kontaktierende Steuerungseinheit (40), welche eingerichtet ist, um zwischen der ersten und zweiten Elektrodeneinheit (10, 20) eine elektrische Spannung anzulegen und weiterhin eingerichtet ist, um durch die erste und/oder zweite Elektrodeneinheit (10, 20) hindurch einen elektrischen Strom fließen zu lassen. Die Erfmdung betrifft weiterhin ein Verfahren zum Betrieb eines solchen Aktorsystems. Die Erfindung erlaubt die zyklische Nutzung der Formgedächtnisfunktion bei geeigneten dielektrischen Elastomeren

## Beschreibung

Die vorliegende Erfindung betrifft ein elektromechanisches Aktorsystem auf der Basis eines dielektrischen Elastomers mit Formgedächtniseigenschaften. Ein weiterer Gegenstand der Erfindung ist ein Verfahren zum Betrieb eines solchen Aktorsystems.

Materialien mit Formgedächtniseigenschaften wie Formgedächtnispolymere (shape memory polymers, SMP) oder Formgedächtnislegierungen (shape memory alloys, SMA) sind solche Materialien, die ihre Gestalt von einer fixierten temporär eingenommenen Form beim Erwärmen oberhalb einer Übergangstemperatur Tₜᵣₐₙₛ oder als Reaktion auf einen anderen äußeren Reiz in eine ursprünglich eingenommene (permanente) Form ändern können. Das Material wird zunächst mit konventionellen Verarbeitungsmethoden in seine permanente Form gebracht. Anschließend wird das Material deformiert und in der gewünschten temporären Form fixiert. Dieses wird auch als "Programmieren" bezeichnet.

Die Programmierung kann zum Beispiel ein Erwärmen des Materials, eine Deformation bei hoher Temperatur und einen Abkühlvorgang oder aber eine Deformation bei niedriger Temperatur ("kaltes Verstrecken") beinhalten. Die permanente Form ist nun gespeichert, während die temporäre Form aktuell vorliegt. Durch Erwärmen des Materials auf eine Temperatur oberhalb von Tₜᵣₐₙₛ kommt es zum Auslösen des Formgedächniseffekts und somit zur Rückbildung der gespeicherten permanenten Form.

Ein Absenken der Temperatur führt zum Erhärten des Materials, nicht jedoch zur Rückbildung der temporären Form. Durch erneutes Programmieren, zu dem eine mechanische Deformation gehört, kann dem Material wieder eine temporäre Form aufgeprägt werden. Die neue temporäre Form muss nicht notwendigerweise mit der vorherigen temporären Form übereinstimmen.

Ein Problem beim Einsatz bisheriger Formgedächtnismaterialien in technischen Anwendungen und insbesondere in Aktoren ist, dass das Programmieren nach Einnehmen der permanenten Form aus der temporären Form mit hohem Aufwand verbunden ist. Dieses setzt der zyklischen Nutzung der Formgedächtnismaterialien enge Grenzen.

So beschreibt beispielsweise US 2007/0037445 Al einen Aktor auf der Basis von Formgedächtnislegierungen, wie er beispielsweise zum Bewegen eines Katheters eingesetzt werden kann. Der Aktor ist ein röhrenförmiger monolithischer SMA-Aktor, der aus einem röhrenförmigen monolithischen SMA-Substrat aus NiTi, CuAlNi, CuAl, CuZnAl, TiV oder TiNb hergestellt ist. Er weist ein erstes Ende, ein zweites Ende und einen mittleren Abschnitt auf und kann aus einem Substrat mit einem beispielsweise kreisförmigen, elliptischen, rechteckigen oder unregelmäßigen Querschnitt erhalten werden. Der mittlere Abschnitt bildet ein Aktormuster, welches im Verlauf des Musters vom ersten bis zum zweiten Ende seine Einheitlichkeit und elektrische Leitfähigkeit bewahrt. Das Aktormuster kann ein beliebiges Muster sein. Beispielsweise kann es ein Mäandermuster oder ein Zickzackmuster sein. Eine erste Elektrode kann an dem ersten Ende und eine zweite Elektrode an dem zweiten Ende des Aktors ausgebildet sein. In einem Verfahren zum Betrieb eines solchen Aktors wird an den Aktor ein elektrischer Strom angelegt, der den Aktor aufheizt und auf diese Weise zu einem Verbiegen des Aktors führt.

Auch in dieser Patentanmeldung wird nicht erwähnt, ob oder wie ein einmal ausgelöster Aktor ein weiteres Mal verwendet werden kann. Dieses beschränkt eine Vorrichtung mit solchen Aktorelementen im Grunde auf Einweganwendungen. Wünschenswert wären daher Aktorsysteme, die es erlauben, Formgedächtnismaterialien auch mehrfach zu verwenden.

Erfindungsgemäß vorgeschlagen wird daher ein elektromechanisches Aktorsystem, umfassend:
eine erste Elektrodeneinheit und eine zweite Elektrodeneinheit;
eine zwischen erster und zweiter Elektrodeneinheit angeordnete Polymerschicht, wobei die Polymerschicht ein dielektrisches Elastomer mit Formgedächtniseigenschaften umfasst;
eine die erste und zweite Elektrodeneinheit kontaktierende Steuerungseinheit, welche eingerichtet ist, um zwischen der ersten und zweiten Elektrodeneinheit eine elektrische Spannung anzulegen und weiterhin eingerichtet ist, um durch die erste und/oder zweite Elektrodeneinheit hindurch einen elektrischen Strom fließen zu lassen.

Im erfindungsgemäßen Aktorsystem werden zwei Charakteristika der verwendeten Polymerschicht genutzt, die sich durch eine unterschiedliche Ansteuerung der Elektroden realisieren lassen. Wenn durch die erste und/oder zweite Elektrodeneinheit ein elektrischer Strom fließt, wird eine Widerstandsheizung realisiert. Auf diese Weise kann das Polymer zur Programmierung erwärmt werden. Die eigentliche Programmierung findet statt, indem zwischen der ersten und der zweiten Elektrodeneinheit eine elektrische Spannung und somit auch ein elektrisches Feld angelegt werden. Hierbei kommt es zu einer Verformung des dielektrischen Elastomers. Nach dem Einnehmen der temporären Form wird das Polymer aktiviert, indem wiederum durch die erste und/oder zweite Elektrodeneinheit ein elektrischer Strom fließt und somit das Polymer erwärmt wird. Diese Vorgänge lassen sich wiederholen, so dass eine zyklische Nutzung des Formgedächtnispolymers als Aktor ermöglicht wird.

Die Elektrodeneinheiten im erfindungsgemäßen Aktorsystem können in sich einheitlich sein oder aber auch Teilstrukturen aufweisen. Im Fall des einheitlichen Aufbaus fließt sowohl der elektrische Strom zum Heizen durch dasselbe Elektrodenmaterial, an das auch die elektrischen Spannung angelegt wird. Der elektrische Widerstand der Elektrodeneinheiten kann durch deren Abmessungen wie deren Dicke mit bestimmt werden. Dieses ist konstruktiv einfach zu realisieren. Teilstrukturen der Elektrodeneinheit können separate elektrische Leitungen zum Aufheizen und zum Anlegen der elektrischen Spannung aufweisen. Vorteilhaft hieran ist, dass die Leitungen für ihre jeweilige Aufgabe optimiert ausgelegt werden können.

Bei den Elektrodenmaterialien kann es sich um dem Fachmann bekannte leitfähige Materialien handeln. Erfindungsgemäß kommen hierfür beispielsweise Metalle, Metall-Legierungen, leitfähige Oligo- oder Polymere, wie zum Beispiel Polythiophene, Polyaniline, Polypyrrole, leitfähige Oxide, wie zum Beispiel Mischoxide wie ITO, oder mit leitfähigen Füllstoffen gefüllte Polymere in Frage. Als Füllstoffe für mit leitfähigen Füllstoffen gefüllte Polymere kommen beispielsweise Metalle, leitfähige Kohlenstoff basierte Materialien, wie zum Beispiel Ruß, Kohlenstoffnanoröhrchen (carbon nanotubes, CNTs) oder wiederum leitfähige Oligo- oder Polymere, in Frage. Der Füllstoffgehalt der Polymere liegt dabei oberhalb der Perkolationsschwelle, so dass die leitfähigen Füllstoffe durchgehende elektrisch leitfähige Pfade ausbilden.

Die Elektroden können durch an sich bekannte Verfahren, beispielsweise durch eine Metallisierung der Oberflächen, durch Sputtern, Aufdampfen, Chemical Vapor Deposition (CVD), Drucken, Rakeln, Lackschleudern (Spin-Coating), Aufkleben oder Aufdrücken einer leitenden Schicht in vorgefertigter Form oder durch eine Sprühelektrode aus einem leitenden Kunststoff realisiert werden. Die Elektroden können dabei strukturiert, beispielsweise in Streifen oder in Gitterform, ausgestaltet sein. Beispielsweise können erfindungsgemäß die Elektroden auch derart strukturiert sein, dass das Aktorsystem als elektromechanischer Wandler aktive und passive Bereiche aufweist.

Die Polymerschicht ist zwischen den Elektrodeneinheiten angeordnet. Sie kann nicht nur die Elektrodeneinheiten unmittelbar kontaktieren. Es ist auch möglich, dass zwischen der Polymerschicht und den Elektrodeneinheiten noch weitere Schichten wie beispielsweise Klebstoffschichten vorhanden sind.

Dielektrische Elastomere im Sinne der vorliegenden Erfindung sind Elastomere, die ihre Form durch das Anlegen eines elektrischen Feldes ändern können. Im Fall von Elastomerfolien kann sich zum Beispiel die Dicke verringern, während es gleichzeitig zu einer Längenausdehnung der Folie in Flächenrichtung kommt. Durch eine Vorverstreckung kann die Richtung der Ausdehnung weitgehend in eine gewünschte Richtung festgelegt werden.

Die Dicke der dielektrischen Elastomerschicht beträgt vorzugsweise ≥10 µm bis ≤200 µm und mehr bevorzugt ≥20 µm bis ≤ 80 µm. Sie kann einstückig oder mehrstückig aufgebaut sein. Beispielsweise kann eine mehrstückige Schicht durch Aufeinanderlaminieren von einzelnen Schichten erhalten werden.

Polymere mit Formgedächtniseigenschaften sind solche Polymere, die ihre Gestalt von einer fixierten temporär eingenommenen Form beim Erwärmen oberhalb einer Übergangstemperatur Tₜᵣₐₙₛ oder als Reaktion auf einen anderen äußeren Reiz in eine ursprünglich eingenommene (permanente) Form ändern können. Das Polymer wird zunächst mit konventionellen Verarbeitungsmethoden in seine permanente Form gebracht. Anschließend wird der Kunststoff deformiert und in der gewünschten temporären Form fixiert. Dieses wird auch als "Programmieren" bezeichnet. Die Programmierung kann zum Beispiel ein Erwärmen des Polymers, eine Deformation bei hoher Temperatur und einen Abkühlvorgang oder aber eine Deformation bei niedriger Temperatur ("kaltes Verstrecken") beinhalten. Die permanente Form ist nun gespeichert, während die temporäre Form aktuell vorliegt. Durch Erwärmen des Polymers auf eine Temperatur oberhalb von Tₜᵣₐₙₛ kommt es zum Auslösen des Formgedächniseffekts und somit zur Rückbildung der gespeicherten permanenten Form. Ein Absenken der Temperatur führt zum Erhärten des Polymers, nicht jedoch zur Rückbildung der temporären Form. Durch erneutes Programmieren, zu dem eine mechanische Deformation gehört, kann dem Werkstück wieder eine temporäre Form aufgeprägt werden. Die neue temporäre Form muss nicht notwendigerweise mit der vorherigen temporären Form übereinstimmen.

Geeignete Polymere sind insbesondere lineare, phasensegregierte Multiblockcopolymere. In der Regel sind dieses Polyurethanpolymere. Diese elastischen Materialien verfügen über mindestens zwei segregierte Phasen. Die Phase mit der höchsten Übergangstemperatur Tₚₑᵣₘ wirkt als Vernetzung, die die permanente Form bestimmt. Oberhalb dieser Temperatur liegt das Polymer als Schmelze vor, wenn es nicht chemisch vernetzt ist, und kann mit konventionellen Verfahren wie Extrusion oder Spritzguss verarbeitet werden. Eine zweite Phase dient als molekularer Schalter und ermöglicht die Fixierung der temporären Form. Dabei kann die Übergangstemperatur der Schaltphase sowohl eine Glasübergangstemperatur T_{g} als auch eine Schmelztemperatur Tₘ sein. Nach dem Umformen des Materials oberhalb der Schalttemperatur, aber unterhalb von Tₚₑᵣₘ, kann die temporäre Form durch Abkühlen unter die Schalttemperatur fixiert werden. Erneutes Aufheizen über Tₜᵣₐₙₛ löst die auf der Schaltphase beruhende physikalische Vernetzung wieder, und das Material geht aufgrund seiner Entropieelastizität in die permanente Form zurück.

Die im erfindungsgemäßen Aktorsystem vorgesehene Steuerungseinheit kann im einfachsten Fall eine Spannungsquelle, elektrische Leitungen zu den Elektrodeneinheiten und an entsprechenden

Stellen der elektrischen Leitungen angebrachte Schalter umfassen. Die Ansteuerung der Elektroden kann auch mittels integrierter Schaltkreise oder auf Anweisung eines Mikroprozessors erfolgen. Vorzugsweise umfasst die Steuerungseinheit einen oder mehrere Operationsverstärker.

Der Formgedächtniseffekt kann in zyklischen thermomechanischen Untersuchungen quantifiziert werden. Die Messungen werden hierbei mit einer Zugprüfmaschine durchgeführt, die über eine Thermokammer verfügt. Ein einzelner Messzyklus umfasst die Programmierung des Probenkörpers und die Wiederherstellung seiner permanenten Form. Ein typisches Messprogramm sieht wie folgt aus: der Probenkörper wird zunächst auf eine Temperatur T_{hoch} oberhalb seiner Schalttemperatur Tₜᵣₐₙₛ erwärmt und auf eine maximale Dehnung εₘ verstreckt. Bei thermoplastischen Kunststoffen ist darauf zu achten, dass die Temperatur des höchsten thermischen Übergangs (Tₚₑᵣₘ) dabei nicht überschritten wird, da ansonsten der Probenkörper schmelzen würde. Bei konstanter Dehnung εₘ wird die Probe anschließend unter die Übergangstemperatur Tₜᵣₐₙₛ auf eine Temperatur T_{tief} abgekühlt und so die temporäre Form fixiert. Danach werden die Klemmen der Zugprüfmaschine auf 0% Dehnung, also auf die ursprüngliche Distanz, zurückgefahren. Dabei biegt sich die Probe durch. Nach dem Aufheizen auf T_{hoch} > Tₜᵣₐₙₛ zieht sich die Probe wieder zusammen und die permanente Form wird wiederhergestellt. Der Messzyklus beginnt dann von Neuem. Das Resultat einer solchen Messung wird in einem Diagramm dargestellt, das die Zugspannung σ gegen die Dehnung ε aufträgt. Das Dehnungsrückstellverhältnis Rᵣ ist ein Maß für die Fähigkeit des Materials, seine permanente Form zu speichern und gibt an, wie vollständig eine bei der Programmierung des Materials erfolgte reale Dehnung εₘ - εₚ (N - 1) im folgenden Formgedächtnisübergang wieder rückgängig gemacht wird. Zu diesem Zweck wird die reale Dehnung der Polymerprobe bei der Programmierung im N-ten Zyklus, εₘ - εₚ (N - 1), mit der Änderung der Dehnung beim Eintritt in des Formgedächtniseffekts, εₘ - εₚ (N), verglichen: Rᵣ(N) = εₘ - εₚ (N)/ εₘ - εₚ (N-1). εₚ (N-1) und εₚ (N) geben Dehnung der Probe im spannungsfreien Zustand in zwei aufeinanderfolgenden Zyklen an. Das Gesamtdehnungsrückstellungsverhältnis R_{r,tot} ist definiert als die Dehnungsrückstellung nach N durchlaufenen Zyklen bezogen auf die Ausgangsform des Probenkörpers: R_{r,tot}(N) = εₘ - εₚ (N)/ εₘ. Mit zunehmender Zahl an Zyklen werden die Messwerte ähnlicher. Der Vorgang der Deformation und Wiederherstellung der permanenten Form wird reproduzierbar und es lassen sich aussagekräftige Dehnungsrückstellungsverhältnisse erhalten.

Erfindungsgemäß bevorzugt einsetzbare dielektrische Elastomere mit Formgedächtniseigenschaften haben ein Gesamtdehnungsrückstellungsverhältnis R_{r,tot} nach 10 Zyklen von ≥20% bis ≤80%.

Die Übergangstemperatur Tₜᵣₐₙₛ der erfindungsgemäß einsetzbaren Elastomere liegt vorzugsweise in einem Bereich von ≥-120 °C bis ≤200°C, mehr bevorzugt von ≥-70 °C bis ≤150°C und noch mehr bevorzugt von ≥20 °C bis ≤30°C.

In einer Ausführungsform des erfindungsgemäßen Aktorsystems umfasst das Material der ersten und/oder zweiten Elektrodeneinheit eine Mischung umfassend Ruß und ein polymeres Polyol. Hierdurch können flexible Elektroden erhalten werden. Geeignete Ruße sind beispielsweise Leitruße, wie sie unter dem Namen Ketjenblack® und HiBlack® erhältlich sind. Vorzugsweise liegt der mittlere Durchmesser der Rußpartikel in einem Bereich von ≥ 10 nm bis ≤ 50 nm. Besonders bevorzugt ist es, wenn eine Mischung zweier Rußsorten zum Einsatz kommt, wobei eine Rußsorte einen mittleren Partikeldurchmesser von ≥28 nm bis ≤32 nm und eine andere Rußsorte einen mittleren Partikeldurchmesser von ≥ 13 nm bis ≤ 25 nm aufweisen. Diese Rußsorten können im Gewichtsverhältnis von 1:1 gemischt werden.

Ein besonders bevorzugtes Polyol ist insbesondere ein Polyoxypropylenglykol mit einem zahlenmittleren Molekulargewicht von ≥900 g/mol bis ≤4100 g/mol und einer Hydroxylzahl gemäß DIN 53240 von ≥26 mg KOH/g bis ≤30 mg KOH/g. Das Polyol und der Ruß können zweckmäßigerweise zusammen gemahlen werden, um eine Elektrodenzubereitung zu erhalten. Das Massenverhältnis von Ruß zu Polyol ist vorzugsweise ≥1:10 bis ≤1:20 und mehr 1:14bis ≤1:16.

In einer weiteren Ausführungsform des erfindungsgemäßen elektromechanischen Aktorsystems weisen die erste und/oder zweite Elektrodeneinheit einen spezifischen elektrischen Widerstand von ≥10⁻⁴ Ω cm bis ≤ 10° Ω cm auf. Dieser Widerstand lässt sich anhand DIN EN 2004-1 bestimmen. Er kann auch ≥10⁻³ Ω cm bis ≤10⁻¹ Ω cm betragen. Solche Widerstände führen in Kombination mit in der Praxis üblichen Elektrodendicken zu einer guten Verwendbarkeit der Elektroden als Widerstandsheizung und zum Aufbau des elektrischen Feldes.

In einer weiteren Ausführungsform des erfindungsgemäßen elektromechanischen Aktorsystems weist das dielektrische Elastomer der Polymerschicht ein Elastizitätsmodul von ≥10 kPa bis ≤10 MPa und vorzugsweise von ≥100 kPa bis ≤1 MPa auf. Der Modul kann mit der Norm DIN EN ISO 6721-1 bestimmt werden.

In einer weiteren Ausführungsform des erfindungsgemäßen Aktorsystems ist das dielektrische Elastomer der Polymerschicht erhältlich aus der Reaktion eines Prepolymers mit einem Polyetherpolyol einer Hydroxylfunktionalität von ≥1,9 bis ≤2,1 und einem Polyisocyanat einer NCO-Funktionalität von ≥ 2,9 bis ≤ 3,1, wobei das Prepolymer aus der Reaktion eines Polyetherpolyols mit einer Hydroxylfunktionalität von ≥2 mit einem Polyisocyanat erhältlich ist. Vorzugsweise weist das Polyetherpolyol zur Herstellung des Prepolymers eine Hydroxylfunktionalität von ≥2,0 bis ≤3,1 auf. Ein besonders geeignetes Polyol ist hierbei ein Polyoxypropylenglykol mit einem zahlenmittleren Molekulargewicht von ≥1900 g/mol bis ≤2100 g/mol.

Zur Herstellung des Prepolymers können die an sich bekannten aromatischen und aliphatischen Polyisocyanate wie beispielsweise Diphenylmethandiisocyanat (MDI) und Hexamethylendiisocyanat (HDI) eingesetzt werden. Als Diphenylmethandiisocyanat können zum Beispiel Isomere wie 2,2'-MDI, 2,4'-MDI, 4,4'-MDI und polymeres MDI in der Reaktion verwendet werden.

Das zur Verlängerung des Prepolymers eingesetzte Polyetherpolyol ist vorzugsweise ein Poly(oxytetramethylen)glykol (polymeres Tetrahydrofuran) mit einem zahlenmittleren Molekulargewicht von ≥1900 g/mol bis ≤100 g/mol und einer Hydroxylzahl gemäß DIN 53240 von ≥ 54 mg KOH/g bis ≤ 58 mg KOH/g. Ein weiterer bevorzugter Polyetherpolyol ist ein Polyoxyethylenglykol, Polyoxypropylenglykol oder Polyoxyethylen-propylen-glykol (EO-Polyether, PO-Polyether oder EO/PO-Polyether) mit einem zahlenmittleren Molekulargewicht von ≥1900 g/mol bis ≤100 g/mol und einer Hydroxylzahl gemäß DIN 53240 von ≥26 mg KOH/g bis ≤30 mg KOH/g.

Der Index von Isocyanatäquivalenten zu gegenüber NCO-Gruppen reaktiven Äquivalenten liegt günstigerweise im Bereich von 1 und bevorzugt von ≥ 1,01 bis ≤ 1,03. Man erhält ein weichelastisches Polyurethan mit hoher Durchbruchsfeldstärke und hohem elektrischen Widerstand bei gleichzeitig guten mechanischen Eigenschaften.

Das erfindungsgemäße Aktorsystem kann beispielsweise in Form eines Stapel-Aktorsystems, Mehrschicht-Stapelaktors, Faltaktors, Rollaktors oder Diaphragma-Systems vorliegen.

Ein weiterer Gegenstand der vorliegenden Erfindung ist ein Verfahren zum Betrieb eines erfindungsgemäßen Aktorsystems, umfassend die Schritte: Bereitstellen eines erfindungsgemäßen Aktorsystems;

Anlegen eines Stromflusses durch die erste und/oder zweite Elektrodeneinheit hindurch, wobei soviel Wärme erzeugt wird, dass das Polymer der Polymerschicht auf eine Temperatur oberhalb der Übergangstemperatur Tₜᵣₐₙₛ des Polymers erwärmt wird;

Beenden des Anlegens des Stromflusses;

Anlegen einer elektrischen Spannung zwischen erster und zweiter Elektrodeneinheit, wobei die Spannung ausreichend ist, um ein Verformen der Polymerschicht zu bewirken;

Beenden des Anlegens der elektrischen Spannung, wenn das Polymer der Polymerschicht eine Temperatur unterhalb seiner Übergangstemperatur Tₜᵣₐₙₛ erreicht hat.

Im erfindungsgemäßen Verfahren erfolgt nach dem Bereitstellen des Aktorsystems das Anlegen eines Stromflusses durch die erste und/oder zweite Elektrodeneinheit hindurch. Durch diesen auch als Joulesches Aufheizen bezeichneten Vorgang kommt es zu einem Erwärmen des dielektrischen Elastomers mit Formgedächtniseigenschaften. Die Stromstärke und somit letztendlich die erzeugte Wärme wird so bemessen, dass die Übergangstemperatur Tₜᵣₐₙₛ des Elastomers überschritten wird. Auf diese Weise ist das Elastomer zur Programmierung vorbereitet.

Nach dem Beenden des Aufheizens wird ein elektrisches Feld durch die Polymerschicht hindurch aufgebaut. Die zwischen den Elektrodeneinheiten angelegte Spannung und somit die elektrische Feldstärke wird so gewählt, dass das Polymer sich gemäß seiner elektroaktiven Eigenschaften verhält und sich verformt. Hierbei befindet sich das Polymer noch oberhalb seiner Übergangstemperatur Tₜᵣₐₙₛ und kann somit seine temporäre Form zugewiesen bekommen.

Die elektrische Spannung, die zum Verformen der Polymerschicht führt, wird erst dann abgeschaltet, wenn das Polymer unter seine Übergangstemperatur abgekühlt ist. Dann ist die temporäre Form fixiert.

Durch erneutes Aufheizen des Polymers über die Elektrodeneinheiten auf eine Temperatur oberhalb von Tₜᵣₐₙₛ kann das Formgedächtnismaterial aktiviert werden. Die zuvor beschriebenen Schritte der Programmierung können dann wieder durchlaufen werden.

In einer Ausführungsform des erfindungsgemäßen Verfahrens beträgt beim Anlegen eines Stromflusses durch die erste und/oder zweite Elektrodeneinheit die Stromstärke ≥0,01 A bis ≤100 A. Die Stromstärke kann auch in einem Bereich von ≥0,1 A bis ≤10 A und vorzugsweise von ≥1 A bis ≤5 A liegen.

In einer weiteren Ausführungsform des erfindungsgemäßen Verfahrens beträgt beim Anlegen einer elektrischen Spannung zwischen erster und zweiter Elektrodeneinheit die Spannung ≥0,01 V bis ≤ 100 V. Die Spannung kann auch in einem Bereich von ≥0,1 V bis ≤10 V und vorzugsweise 1 V bis ≤5 V liegen.

Vorteilhafte Anwendungen des erfindungsgemäßen Aktorsystems sind insbesondere die Verwendung als Fluidpumpe, taktiles Anzeigeelement oder als reversibel lösbare Verbindung zwischen zwei Werkstücken.

Durch die nachfolgend aufgeführten Zeichnungen und Beispiele soll die Erfindung weiter erläutert werden, ohne auf diese beschränkt zu sein. Es zeigen:
- FIG. 1: ein erfindungsgemäßes Aktorsystem beim Heizen der Polymerschicht
- FIG. 2: ein erfindungsgemäßes Aktorsystem beim Anlegen einer elektrischen Spannung
- FIG. 3: Elastizitätsmodulkurven für ein erfindungsgemäß einsetzbares Elastomer
- FIG. 4: Elastizitätsmodulkurven für ein weiteres erfindungsgemäß einsetzbares Elastomer.

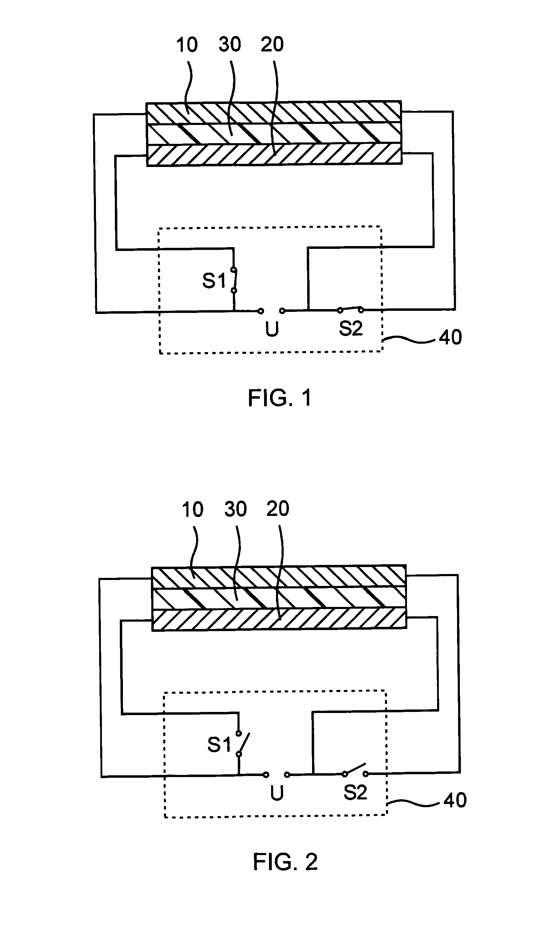

FIG. 1 zeigt ein erfindungsgemäßes Aktorsystem. Zwischen einer ersten Elektrodeneinheit 10 und einer zweiten Elektrodeneinheit 20 ist eine Schicht 30 eines dielektrischen Elastomers mit Formgedächtniseigenschaften angeordnet. Die Elektrodeneinheiten 10, 20 sind über elektrische Leitungen mit einer schematisch dargestellten Steuerungseinheit 40 verbunden. Die Steuerungseinheit 40 umfasst eine Spannungsquelle U und in den elektrischen Leitungen von der Spannungsquelle U zu den Elektrodeneinheiten 10, 20 angeordnete Schalter S1 und S2. In der in

FIG. 1 dargestellten Anordnung sind S1 und S2 geschlossen. Auf diese Weise kann in einer Parallelschaltung Strom durch die erste und zweite Elektrodeneinheit 10, 20 fließen und die Elastomerschicht 30 kann aufgeheizt werden. Durch geeignet gewählte Parameter wie elektrischer Widerstand der Elektrodeneinheiten 10, 20, Stromstärke und Dauer des Stromflusses wird die Elastomerschicht 30 auf eine Temperatur oberhalb der Übergangstemperatur Tₜᵣₐₙₛ erwärmt.

FIG. 2 zeigt ein weiteres erfindungsgemäßes Aktorsystem. Im Gegensatz zu der in FIG. 1 gezeigten Anordnung sind jedoch die Schalter S1 und S2 geöffnet. Dann fließt kein elektrischer Strom mehr durch die Elektrodeneinheiten 10, 20. Stattdessen wird nun zwischen der ersten Elektrodeneinheit 10 und der zweiten Elektrodeneinheit 20 eine elektrische Spannung und somit durch die Elastomerschicht 30 ein elektrisches Feld aufgebaut. Bedingt durch die dielektrischen Eigenschaften der Elastomerschicht 30 kommt es zu einer hier nicht explizit dargestellten Dickenkontraktion und Flächenausdehnung dieser Schicht. Zur Programmierung der Elastomerschicht 30 wird das elektrische Feld angelegt, nachdem durch vorheriges Aufheizen die Übergangstemperatur Tₜᵣₐₙₛ überschritten wurde. Das elektrische Feld wird erst dann abgeschaltet, wenn die Übergangstemperatur wieder unterschritten wurde. Auf diese Weise wird die temporäre Form des Formgedächtniselastomers fixiert. Ein nachfolgendes Aktivieren durch Aufheizen erreicht man durch Schließen der Schalter S1 und S2, wie in FIG. 1 erläutert.

Beispiele:
Die Herstellung von dielektrischen Elastomeren, welche im erfindungsgemäßen Aktor eingesetzt werden können, wird nachfolgend beschrieben. Sofern nicht abweichend gekennzeichnet, beziehen sich alle Prozentangaben auf das Gewicht und alle analytischen Messungen auf Temperaturen von 23 °C. NCO-Gehalte wurden, wenn nicht ausdrücklich anders erwähnt, volumetrisch gemäß DIN-EN ISO 11 909 bestimmt. Die angegebenen Viskositäten wurden mittels Rotationsviskosimetrie nach DIN 53019 bei 23 °C mit einem Rotationsviskosimeter der Firma Anton Paar Germany GmbH bestimmt. Die Vermischung der reaktiven Komponenten geschah mit einem Speedmixer (Modell 150 FV der Firma Hauschild & Co KG).

Die dynamisch-mechanische Analyse geschah mittels eines Spektrometers der Firma Seiko Instruments, Modell 6100.

Verwendete Substanzen und Abkürzungen:
Desmodur® N 3300: trifunktionelles Isocyanurat auf Basis von Hexamethylendiisocyanat, NCO-Gehalt 21,8 ± 0,3 % (nach DIN EN ISO 11 909), Viskosität bei 23 °C 3000 ± 750 mPas, Bayer MaterialScience AG
Terathane® 2000 : difunktioneller Polytetramethylenetherglykol mit einem zahlenmittleren Molekulargewicht von 2000 g/mol der Firma INVISTA Resins & Fibers
Acclaim® 4220: difunktioneller Polypropylenglykol-polyethylenglykol-Polyether mit einem zahlenmittleren Molekulargewicht von 4000 g/mol und einem Anteil an Ethylenoxid-Einheiten von 20 Gewichts-%, Bayer MaterialScience AG
Arcol® PPG 2000: Polypropylenglykol mit Mₙ = 2000 g/mol, Bayer MaterialScience AG
DBTDL: Dibutyl-Zinn-Dilaurat der Firma E. Merck KGaA

Beispiel 1: Herstellung eines di-isocyanatfunktionellen Polyisocyanat-Prepolymers:
1300 g Hexamethylen-1,6-diisocyanat (HDI) und 0,27 g Dibutylphosphat wurden in einem 4 Liter Vierhalskolben unter Rühren vorgelegt. Innerhalb von 3 Stunden fügte man bei 80 °C 1456 g eines difunktionellen Polypropylenglykol-Polyethers mit einem zahlenmittleren Molekulargewicht von 2000 g/mol hinzu und rührte 1 Stunde bei gleicher Temperatur nach. Anschließend wurde durch Dünnschichtdestillation bei 130 °C und 0,1 Torr das überschüssige HDI abdestilliert. Das erhaltene NCO-Prepolymer hatte einen NCO-Gehalt von 3,27% und eine Viskosität von 1680 mPas (25 °C).

Beispiel 2: Herstellung eines erfindungsgemäß verwendbaren Elastomers
Die eingesetzten Rohstoffe wurden nicht separat entgast. 2,0 g Desmodur® N 3300 und 8,0 g des Prepolymers aus Beispiel 1 wurden in einem Polypropylen-Becher eingewogen und im Speedmixer bei 3000 Umdrehungen pro Minute für 1 Minute miteinander vermischt. Diese Mischung wurde dann mit 15,41 g Terathane® 2000 und 0,0046 g DBTDL in einem Polypropylen-Becher im Speedmixer bei 3000 Umdrehungen pro Minute für die Dauer von 3 Minuten vermischt. Aus dem noch flüssigen Reaktionsgemisch wurden auf Glasplatten von Hand Filme mit einer Nassschichtdicke von 1 mm gerakelt. Alle Filme wurden nach der Herstellung bei 80 °C im Trockenschrank über Nacht getrocknet und anschließend 5 min bei 120 °C nachgetempert. Die Filme konnten nach dem Tempern von Hand einfach von der Glasplatte gelöst werden

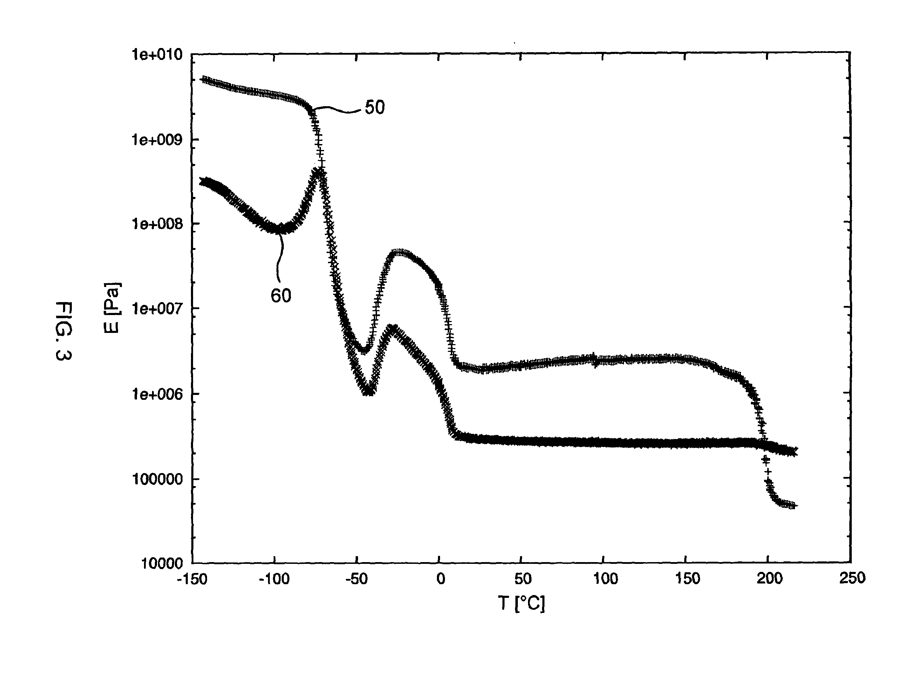

Eine so hergestellt Probe wurde einer dynamisch-mechanischen Analyse nach DIN EN ISO 6721 unterzogen. Die erhaltene Modulkurve ist in FIG. 3 wiedergegeben.

FIG. 3 zeigt die Bestimmung des temperaturabhängigen komplexen Elastizitätsmoduls für das in Beispiel 2 erhaltene dielektrische Elastomer. Die Messpunkte (+) bilden Kurve 50 und stellen den Realteil E' des komplexen Elastizitätsmoduls dar. Messpunkte (X) bilden Kurve 60 und repräsentieren den Imaginärteil E". Die Oszillationsfrequenz betrug 1 Hz und die Heizrate 2 °C/Minute. Es wurden folgende Kennwerte ermittelt: Glasübergangstemperatur T_{g}: -73,4 °C; E' (-120 °C): 3824 MPa; E' (20 °C): 2 MPa; E' (60 °C): 2 MPa; T (2 MPa): 31,6 °C.

Beispiel 3: Herstellung eines weiteren erfindungsgemäß verwendbaren Elastomers
Die eingesetzten Rohstoffe wurden nicht separat entgast. 8 g Prepolymer aus Beispiel 1 wurde mit 2 g Desmodur® N 3300 im Speedmixer für die Dauer von 1 min bei 3000 U/min vermischt und die Mischung mit 30,84 g Acclaim® 4220 und mit 0,00925g DBTDL in einem Polypropylen-Becher im Speedmixer ebenfalls bei 3000 Umdrehungen pro Minute für die Dauer von 1 Minute vermischt. Aus dem noch flüssigen Reaktionsgemisch wurden auf Glasplatten von Hand Filme einer Nassschichtdicke von 1 mm gerakelt. Alle Filme wurden nach der Herstellung bei 80 °C im Trockenschrank über Nacht getrocknet und anschließend 5 min bei 120 °C nachgetempert. Die Filme konnten nach dem Tempern von Hand einfach von der Glasplatte gelöst werden.

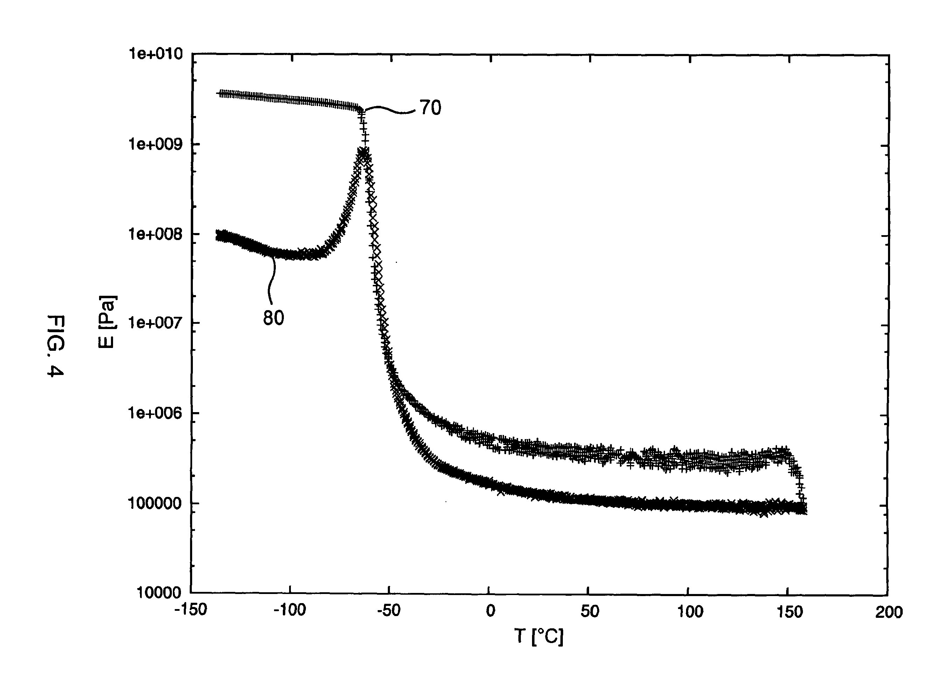

Die so hergestellt Probe wurde einer dynamisch-mechanischen Analyse nach DIN EN ISO 6721 unterzogen. FIG. 4 zeigt die erhaltene Modulkurve.

FIG. 4 zeigt die Bestimmung des temperaturabhängigen komplexen Elastizitätsmoduls für das in Beispiel 3 erhaltene dielektrische Elastomer. Die Messpunkte (+) bilden Kurve 70 und stellen den Realteil E' des komplexen Elastizitätsmoduls dar. Messpunkte (X) bilden Kurve 80 und repräsentieren den Imaginärteil E". Die Oszillationsfrequenz betrug 1 Hz und die Heizrate 2 °C/Minute. Es wurden folgende Kennwerte ermittelt: Glasübergangstemperatur T_{g}: -64,3 °C; E' (-120 °C): 3357 MPa; E'(20 °C): 0,44 MPa; E'(60 °C): 0,36 MPa; T (2 MPa): -45 °C.

## Patentansprüche

1. Elektromechanisches Aktorsystem, umfassend:
eine erste Elektrodeneinheit (10) und eine zweite Elektrodeneinheit (20);
eine zwischen erster und zweiter Elektrodeneinheit (10, 20) angeordnete Polymerschicht (30),
wobei die Polymerschicht (30) ein dielektrisches Elastomer mit Formgedächtniseigenschaften umfasst;
eine die erste und zweite Elektrodeneinheit (10, 20) kontaktierende Steuerungseinheit (40), welche eingerichtet ist, um zwischen der ersten und zweiten Elektrodeneinheit (10, 20) eine elektrische Spannung anzulegen und weiterhin eingerichtet ist, um durch die erste und/oder zweite Elektrodeneinheit (10, 20) hindurch einen elektrischen Strom fließen zu lassen.

2. Elektromechanisches Aktorsystem gemäß Anspruch 1, wobei das Material der ersten und/oder zweiten Elektrodeneinheit eine Mischung umfassend Ruß und ein polymeres Polyol umfasst.

3. Elektromechanisches Aktorsystem gemäß Anspruch 1, wobei die erste und/oder zweite Elektrodeneinheit einen spezifischen elektrischen Widerstand von ≥ 10⁻⁴ Ω cm bis ≤ 10⁰ Ω m aufweisen.

4. Elektromechanisches Aktorsystem gemäß Anspruch 1, wobei das dielektrische Elastomer der Polymerschicht (30) ein Elastizitätsmodul von ≥10 kPa bis ≤10 MPa aufweist.

5. Elektromechanisches Aktorsystem gemäß Anspruch 1, wobei das dielektrische Elastomer der Polymerschicht (30) erhältlich ist aus der Reaktion eines Prepolymers mit einem Polyetherpolyol einer Hydroxylfunktionalität von ≥ 1,9 bis ≤ 2,1 und einem Polyisocyanat einer NCO-Funktionalität von ≥2,9 bis ≤3,1, wobei das Prepolymer aus der Reaktion eines Polyetherpolyols mit einer Hydroxylfunktionalität von ≥2 mit einem Polyisocyanat erhältlich ist.

6. Elektromechanisches Aktorsystem gemäß Anspruch 1, vorliegend in Form eines Stapel-Aktorsystems, Mehrschicht-Stapelaktors, Faltaktors, Rollaktors oder Diaphragma-Systems.

7. Verfahren zum Betrieb eines Aktorsystems gemäß Anspruch 1, umfassend die Schritte:
Bereitstellen eines Aktorsystems gemäß Anspruch 1;
Anlegen eines Stromflusses durch die erste und/oder zweite Elektrodeneinheit (10, 20) hindurch, wobei soviel Wärme erzeugt wird, dass das Polymer der Polymerschicht (30) auf eine Temperatur oberhalb der Übergangstemperatur Tₜᵣₐₙₛ des Polymers erwärmt wird;
Beenden des Anlegens des Stromflusses;
Anlegen einer elektrischen Spannung zwischen erster und zweiter Elektrodeneinheit (10, 20), wobei die Spannung ausreichend ist, um ein Verformen der Polymerschicht zu bewirken;
Beenden des Anlegens der elektrischen Spannung, wenn das Polymer der Polymerschicht (30) eine Temperatur unterhalb seiner Übergangstemperatur Tₜᵣₐₙₛ erreicht hat.

8. Verfahren gemäß Anspruch 7, wobei beim Anlegen eines Stromflusses durch die erste und/oder zweite Elektrodeneinheit (10, 20) die Stromstärke ≥0,01 A bis ≤100 A beträgt.

9. Verfahren gemäß Anspruch 7, wobei beim Anlegen einer elektrischen Spannung zwischen erster und zweiter Elektrodeneinheit (10, 20) die Spannung ≥0,01 V bis ≤100 V beträgt.

10. Verwendung eines Aktorsystems gemäß Anspruch 1 als Fluidpumpe, taktiles Anzeigeelement oder als reversibel lösbare Verbindung zwischen zwei Werkstücken.
